(19) Europäisches Patentamt

European Patent Office

Office européen des brevets

(11) **EP 4 775 534 A1**

(12) **EUROPEAN PATENT APPLICATION**

(43) Date of publication:
**15.07.2026 Bulletin 2026/29**

(21) Application number: **25151504.5**

(22) Date of filing: **13.01.2025**

(51) International Patent Classification (IPC):
*C01B 3/28* (2026.01)    *B01J 8/12* (2006.01)
*B01J 8/18* (2006.01)    *C01B 3/30* (2006.01)
*C01B 32/05* (2017.01)    *C01B 3/24* (2006.01)
*B01J 19/08* (2006.01)

(52) Cooperative Patent Classification (CPC):
**C01B 3/28; C01B 3/24; C01B 32/05;** B01J 8/12;
B01J 8/1881; B01J 2208/00415; C01B 2203/0266;
C01B 2203/0277

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **BASF SE**
**67056 Ludwigshafen am Rhein (DE)**

(72) Inventors:
• **Rieck, Daniela**
**67056 Ludwigshaven am Rhein (DE)**

• **Bode, Johannes**
**67056 Ludwigshaven am Rhein (DE)**
• **Johannsen, Jens Peter**
**67056 Ludwigshaven am Rhein (DE)**
• **Chan-Braun, Clemens Thomas**
**67056 Ludwigshaven am Rhein (DE)**
• **Flick, Dieter**
**67056 Ludwigshaven am Rhein (DE)**

(74) Representative: **BASF IP Association**
**BASF SE**
**GBI - Z078**
**67056 Ludwigshafen (DE)**

(54) **HYDROCARBON FLUSHING TO REDUCE PRODUCT CARBON FOOTPRINT**

(57) A process for reducing the amount of feed gas A in a void volume of solid particles S, whereby solid particles D are obtained, in a reactor, wherein a reaction is carried out, the reactor having a start and an end, wherein the start is preferably a top (T) and the end is preferably a bottom (B) of the reactor, a feed gas inlet A, a gas outlet, a solid particle inlet and a solid particle outlet, the process comprising displacement of at least a part of the feed gas A in the void volume of the solid particles S with a gas B different from said feed gas A, wherein the displacement is carried out by addition of the gas B at the end, preferably at the bottom of the reactor between the feed gas inlet A and the solid particle outlet, wherein the solid particles D are discharged at the bottom of the reactor via a solid particle outlet, or the displacement is carried out by addition of the gas B to a vessel, wherein the solid particles S are collected in the vessel, the vessel being connected with the solid particle outlet at the start, preferably at the top and/or at the end, preferably at the bottom of the reactor;
and
to a reactor (R) for a reaction of a feed gas A in the presence of solid particles P, preferably a pyrolysis, more preferably a methane pyrolysis, wherein solid particles S are obtained comprising feed gas A in its void volume, the reactor having a start and an end, wherein the start is preferably a top (T) and the end is preferably a bottom (B) and a solid particle outlet at the end, preferably at the bottom and/or at the start, preferably at the top of the reactor, preferably at the end, more preferably at the bottom, a feed gas inlet A, a gas outlet, and a solid particle inlet, and having either an inlet B for a gas B for displacement of the feed gas A in the void volume of said solid particles S for obtaining solid particles D having a reduced amount of feed gas A in a void volume, at the end, preferably at the bottom of the reacfor between the feed gas inlet A and the solid particle outlet, or having an inlet C for a gas B for displacement of the feed gas A in the void volume of said solid particles S for obtaining solid particles D having a reduced amount of feed gas A in a void volume in a vessel, wherein the solid particles S are collected in the vessel, the vessel being connected with the solid particle outlet at the start, preferably at the top and/or at the end, preferably at the bottom of the reactor.

**Description**

The present invention relates to a process for reducing the amount of feed gas A in a void volume of solid particles S, whereby solid particles D are obtained, in a reactor, wherein a reaction is carried out, the reactor having a start and an end, wherein the start is preferably a top (T) and the end is preferably a bottom (B) of the reactor, a feed gas inlet A, a gas outlet, a solid particle inlet and a solid particle outlet, the process comprising displacement of at least a part of the feed gas A in the void volume of the solid particles S with a gas B different from said feed gas A, wherein the displacement is carried out by addition of the gas B at the end, preferably at the bottom of the reactor between the feed gas inlet A and the solid particle outlet, wherein the solid particles D are discharged at the bottom of the reactor via a solid particle outlet, or the displacement is carried out by addition of the gas B to a vessel, wherein the solid particles S are collected in the vessel, the vessel being connected with the solid particle outlet at the start, preferably at the top and/or at the end, preferably at the bottom of the reactor;
and
to a reactor (R) for a reaction of a feed gas A in the presence of solid particles P, preferably a pyrolysis, more preferably a methane pyrolysis, wherein solid particles S are obtained comprising feed gas A in its void volume, the reactor having a start and an end, wherein the start is preferably a top (T) and the end is preferably a bottom (B) and a solid particle outlet at the end, preferably at the bottom and/or at the start, preferably at the top of the reactor, preferably at the end, more preferably at the bottom, a feed gas inlet A, a gas outlet, and a solid particle inlet, and having either an inlet B for a gas B for displacement of the feed gas A in the void volume of said solid particles S for obtaining solid particles D having a reduced amount of feed gas A in a void volume, at the end, preferably at the bottom of the reactor between the feed gas inlet A and the solid particle outlet, or having an inlet C for a gas B for displacement of the feed gas A in the void volume of said solid particles S for obtaining solid particles D having a reduced amount of feed gas A in a void volume in a vessel, wherein the solid particles S are collected in the vessel, the vessel being connected with the solid particle outlet at the start, preferably at the top and/or at the end, preferably at the bottom of the reactor.

Solid particles, e.g. carbon particles, which are removed from (locked out of) a reactor after contact with a feed gas, e.g. a hydrocarbon such as methane, generally contain residues of the feed gas in their void volume. An example is the pyrolysis of methane or natural gas in the presence of carbon particles for the production of hydrogen and pyrolysis carbon.

Before the solid particles removed from (locked out of) the reactor can be handled further, the - generally combustible - feed gas is generally removed from the void volume of the solid particles for safety reasons.

This can be done, for example, by flushing the particles with nitrogen or air, whereby the gas mixture obtained after flushing (the resulting exhaust gas) is generally either released into the atmosphere or burned. In any case, this process contributes to an increase in the PCF of the reaction product(s). Furthermore, the feed gases trapped in the void volume of the particles are prevented from further conversion to the reaction product, which reduces the product yield. Recirculation of the gas mixture obtained after flushing with nitrogen or air is also unfavorable, since larger quantities of nitrogen or air must first be separated before the flushed out feed gas can be reintroduced into the process.

WO2021/083715 A1 relates to a method and system for operating a descending moving bed reactor with flowable granular material. It focuses on the use of lock-hoppers for managing pressure and atmosphere differences during the transfer of solid materials. The method involves filling and emptying lock-hoppers with granular material, purging with gas, and using product gas for pressure equalization. The process aims to minimize purge gas consumption and prevent flammable gas mixtures. The reactor is a descending moving bed type, with a focus on lock-hopper systems for solid material transfer. The document details the use of purge gas circuits and pressure equalization techniques.

The object of the present invention is therefore to provide a method and a reactor to reduce the PCF of the desired reaction product(s) and, preferably additionally, to increase the yield of the desired reaction product(s).

The object is achieved by

a process for reducing the amount of feed gas A in a void volume of solid particles S, whereby solid particles D are obtained, in a reactor, wherein a reaction is carried out, the reactor having a start and an end, wherein the start is preferably a top (T) and the end is preferably a bottom (B) of the reactor, a feed gas inlet A, a gas outlet, a solid particle inlet and a solid particle outlet, the process comprising
displacement of at least a part of the feed gas A in the void volume of the solid particles S with a gas B different from said feed gas A,
wherein the displacement is carried out by addition of the gas B at the end, preferably at the bottom of the reactor between the feed gas inlet A and the solid particle outlet, wherein the solid particles D are discharged at the end, preferably at the top and/or at the bottom of the reactor via a solid particle outlet,
or
the displacement is carried out by addition of the gas B to a vessel, wherein the solid particles S are collected in the vessel, the vessel being connected with the solid particle outlet at the start, preferably at the top and/or at the end, preferably the bottom of the reactor;
and
a reactor (R) for a reaction of a feed gas A in the presence of solid particles P, preferably a pyrolysis, more preferably a methane pyrolysis, wherein solid particles S are obtained comprising feed gas A in its void volume,
the reactor having a start and an end, wherein the start is preferably a top (T) and the end is preferably a bottom (B) and a solid particle outlet at the end, preferably at the bottom and/or at the start, preferably at the top of the reactor, , preferably at the end, more preferably at the bottom, a feed gas inlet A, a gas outlet, and a solid particle inlet, and having
either an inlet B for a gas B for displacement of the feed gas A in the void volume of said solid particles S for obtaining solid particles D having a reduced amount of feed gas A in a void volume at the end, preferably at the bottom of the reactor between the feed gas inlet A and the solid particle outlet,
or having an inlet C for a gas B for displacement of the feed gas A in the void volume of said solid particles S for obtaining solid particles D having a reduced amount of feed gas A in a void volume in a vessel, wherein the solid particles S are collected in the vessel, the vessel being connected with the solid particle outlet at the start, preferably at the top and/or at the end, preferably at the bottom of the reactor.

By the process and the reactor of the present invention, the gas B displaces the feed gas A trapped in the void volume of the solid particles S and said feed gas A is still available for the reaction and does not need to be burned or released into the atmosphere, thereby reducing the PCF (product carbon footprint) of the reaction product(s) and at the same time generally also the yield of the reaction product(s).

In the meaning of the present invention, the term "gas" refers to compounds that are gaseous at process temperature and pressure.

The present invention relates to a process for reducing the amount of feed gas A in a void volume of solid particles S for obtaining solid particles D having a reduced amount of feed gas A in the void volume.

According to the present invention, "reducing" and "reduced amount" has the meaning that the amount of feed gas A present in the void volume of solid particles D is lower than in the void volume of solid particles S, i.e, in a case, wherein no gas B is added for displacement of the feed gas A.

Further, "displacement of at least a part of the feed gas A in the void volume" means that the feed gas A is completely or partly displaced by the gas B. "Displacement of at least a part of the feed gas A" therefore preferably means that at least 10 Vol%, more preferably at least 20 Vol%, further more preferably at least 30 Vol%, most preferably at least 40 Vol%, further most preferably at least 50 Vol% of the total amount of the feed gas A in the void volume are displaced by the gas B; and preferably up to 100 Vol%, more preferably up to 99 Vol%, most preferably up to 95 Vol% of the total amount of the feed gas A in the void volume are displaced by the gas B.

According to the present invention, "void volume" means the inter-particle void volume. This term describes the space that exists between individual particles in a bulk of solid particles, such as in powders, granular materials, pelletized materials and other forms of particulate matter. The term "solid particles" used in the present application covers a "bulk of solid particles".

Generally, solid particles P are introduced at the start, preferably at the top of the reactor and solid particles D or S (depending on the specific embodiment) are discharged at the end, preferably bottom of the reactor. A feed gas A is introduced at the end, preferably at the bottom of the reactor and a product gas G is discharged at the start, preferably at the top of the reactor. The gas B is preferably added at the end, preferably at the bottom of the reactor between an outlet for the solid particles and an inlet for the feed gas A.

Generally, the gas flow in the reactor is from the end to the start, preferably the bottom to the top, and the solid particle flow is from the start of the reactor to the end, preferably from the top of the reactor to the bottom of the reactor.

In other words, generally, the gas may flow from the left to the right or vice versa, or from the bottom up to the top, and the solid particles may flow from the right to the left or vice versa, or from the top down to the bottom. Preferably, gas flows from the bottom up to the top, and the solid particles flow from the top down to the bottom.

The end of the reactor is the part of the reactor, where the solid particles (D or S) are discharged from the reactor. According to the present invention, the end of the reactor preferably means the last 15%, preferably the last 10% of the reactor before the solid particle outlet of the reactor in relation to the total length of the reactor. Preferably, the end of the reactor is the bottom of the reactor.

The bottom (B) of the reactor, also called for example reactor sump is the lower part of the reactor or the end of the reactor where the particles are discharged.

According to the present invention, the bottom of the reactor preferably means the lowest or last 15%, preferably the lowest or last 10% of the reactor in relation to the total height or length of the reactor.

The start of the reactor is the farthest part of the reactor from the end of the reactor.

According to the present invention, the start of the reactor means the first 15%, preferably the first 10% of the reactor in relation to the total length of the reactor.

The top (T) of the reactor, also called for example reactor head is the upper part of the reactor.

According to the present invention, the top of the reactor means the top 15%, preferably the top 10% of the reactor in relation to the total height of the reactor.

"A solid particle outlet at the end and/or at the start of the reactor" means that the solid particle outlet is present in the first 15%, preferably in the first 10% and/or in the last 15%, preferably in the last 10% of the reactor, in relation to the total length of the reactor.

"A solid particle outlet at the bottom and/or at the top of the reactor" means that the solid particle outlet is present in the top 15%, preferably top 10% and/or in the lowest 15%, preferably in the lowest 10% of the reactor, in relation to the total length, preferably total height of the reactor.

Generally, a product gas G leaves the reactor at an outlet at the start, preferably at the top of the reactor. The outlet for the gas G is therefore preferably present at the top 15%, preferably top 10%, in relation to the total length, preferably total height of the reactor.

The reaction according to the present invention may be selected from any reaction wherein a feed gas A and solid particles P participate. The present invention may therefore be applied to a wide variety of reactions. The reaction may simply involve the decomposition, dehydration or dehydrogenation of a reactant, but may also involve other reactants, in particular other gaseous reactants or solid reactants.

In preferred embodiments, the reaction is selected from

(i) Hydrocarbon pyrolysis, especially methane pyrolysis according to the idealized equation

$$CH_4 \rightarrow C + 2\,H_2$$

over a bed of solid particles, like carbonaceous particles, preferably carbon particles;
(ii) Cracking of hydrocarbons according to the idealized equation

$$C_{(n+m)}H_{(2n+2m+2)} \rightarrow C_nH_{(2n)} + C_mH_{(2m)} + H_2$$

over a bed of solid particles, like carbonaceous particles, preferably carbon particles;
(iii) reforming of ammonia according to the idealized equation

$$2\,NH_3 \rightarrow N_2 + 3H_2$$

over a bed of particles of transition metal (such as Fe or Ni) supported on a refractory support material;
(iv) decomposition of methanol according to the idealized equation

$$CH_3OH \rightarrow CO + 2\,H_2$$

over a bed of Cu catalyst;
(v) reforming of methanol according to the idealized equation

$$CH_3OH + H_2O \rightarrow CO_2 + 3\,H_2$$

over a bed of Cu catalyst;
(vi) Reverse Water Gas Shift Reaction according to the idealized equation

$$CO_2 + H_2 \rightarrow CO + H_2O$$

over a bed of Ni catalyst;
(vii) Methane Steam Reforming according to the idealized equation

$$CH_4 + H_2O \rightarrow CO + 3\,H_2$$

over a bed of SiC, C, Ni catalyst or Fe catalyst;
(viii) Methane Dry Reforming according to the idealized equation

$$CH_4 + CO_2 \rightarrow 2\,CO + 2\,H_2$$

over a bed of SiC, C, Ni catalyst or Fe catalyst;

(ix) formation of hydrocyanic acid by the reaction of ammonia with hydrocarbons according to the idealized equation

$$CH_4 + NH_3 \rightarrow HCN + 3\ H_2$$

over a bed of carbon particles;
(x) formation of hydrocyanic acid by formamide cleavage according to the idealized equation

$$HCONH_2 \rightarrow HCN + H_2O$$

over a bed of stain less particles or Fe catalyst;
(xi) Boudouard reaction according to the idealized equation

$$CO_2 + C \rightarrow 2\ CO$$

over a bed of carbon particles;
(xii) dehydroaromatization of methane according to the idealized equation

$$6\ CH_4 \rightarrow C_6H_6 + 9\ H_2$$

over a bed of Mo catalyst, optionally a mixed bed of Mo catalyst and carbon particles;
(xiii) alkane dehydrogenation according to the idealized equation

$$C_nH_{(2n+2)} \rightarrow C_nH_{(2n)} + H_2, \text{ wherein } n = 2,3,4$$

over a bed of FeO/Pt catalyst, optionally over a mixed bed of FeO/Pt catalyst and carbon particles;
(xiv) styrene synthesis according to the idealized equation

$$C_8H_{10} \rightarrow C_8H_8 + H_2$$

over a bed of FeO/Pt catalyst, optionally over a mixed bed of FeO/Pt catalyst and carbon particles;
(xv) formation of anhydrous formaldehyde according to the idealized equation

$$CH_3OH \rightarrow CH_2O + H_2$$

over a bed of Ag catalyst;
(xvi) cyclohexane dehydrogenation according to the idealized equation

$$C_6H_{12} \rightarrow C_6H_6 + 3\ H_2$$

over a bed of Pt catalyst;
(xvii) alcohol dehydration according to the idealized equation

$$C_nH_{(2n+1)}OH \rightarrow C_nH_{(2n)} + H_2O, \text{ wherein } n = 2,3,4$$

over a bed of zeolith catalyst, optionally including carbon particles;
(xviii) vinyl formamide synthesis from cyanoethyl formamide according to the idealized equation $CH_3CH(CN)(NH\text{-}COH) \rightarrow CH_2CH(NH\text{-}COH) + HCN$ over a mixed bed of potassium hydroxide on alumina and carbon particles, or carbonized catalyst of potassium hydroxide on alumina;
(xix) melamine synthesis according to the idealized equation

$$6\ (NH_2)_2CO \rightarrow C_3N_6H_6 + 6\ NH_3 + 3\ CO_2$$

over a mixed bed of bauxite and carbon particles, or carbonized bauxite;
(xx) oxidation of sulfur dioxide to sulfur trioxide as first step in the production of sulfuric acid, according to equation

$$2SO_2 + O_2 \rightarrow 2SO_3$$

over a bed of vanadium(V) oxide catalyst;

(xxi) calcination of catalysts by decomposition of, e.g., nitrates, carbonates and hydroxides;

(xxii) drying of granulates in agricultural, wood and food industries; in paper, animal feed and pellet production; or in cement and recycling industry;

(xxiii) regeneration of adsorbents, e.g., activated carbon; and

(xxiv) regeneration of carbonized catalysts, e.g., desulfurization catalysts like Mo-Co on gamma-alumina, MTO catalysts and styrene catalysts.

Preferably, the reaction is selected from (i) and (ii), more preferably (i).

Generally, the feed gas A depends on the reaction. Suitable feed gases A for carrying out the reactions according to the present invention are known in the art.

Since the reactions are preferably selected from the reactions (i) and (ii), the feed gas A according to the present invention preferably comprises or consists of at least one kind of hydrocarbons. The hydrocarbons are preferably gaseous and/or liquid hydrocarbons under "normal conditions" (Normbedingungen), i.e. at a temperature of 20°C (293.15 K) and a pressure of 1 atm (101.3 kPa). Preferred hydrocarbons are selected from methane, hydrocarbons, in particular $C_2$ to $C_9$ hydrocarbons, and mixtures thereof. More preferred are methane, ethane, propane, butane, pentane, naphtha or mixtures thereof, further more preferably methane, ethane, naphtha or mixtures thereof. Most preferably - in case of the chemical reaction (i) - methane.

The feed gas A may comprise at least one gaseous reactant (in case of the preferred reactions (i) and (ii) at least one hydrocarbon) at least one inert gas ((for example in methane pyrolysis (preferred reaction (i)) $H_2$ or $N_2$ as inert gas). "Inert gas" in the meaning of the present invention is a gas which does not participate in the reaction itself. This means that the gas does generally not react with the reactants or products for the reactions covered by the present application.

Preferred feed gases A for the reaction (i) (hydrocarbon pyrolysis) comprise methane as gaseous reactant (hydrocarbon gas), e.g., at least 50 vol.-% of methane, preferably at least 75 vol.-% of methane, more preferably at least 85 vol.-% of methane. The remainder are generally hydrocarbons other than methane, like ethane, propane, butane, pentane, higher hydrocarbons and mixtures thereof.

The feed gas A for the reaction (i) (hydrocarbon pyrolysis) comprises or consists of for example natural gas, biogas, e.g. biomethane, synthetic methane, industrial off gas e.g. comprising methane, e.g. cracker off gas, sewage gas comprising methane, or mixtures thereof, even more preferably natural gas comprising methane and/or biogas, like biomethane is used as feed gas.

Preferred feed gas A for the reaction (ii) (cracking processes) comprises or consists of gaseous and/or liquid hydrocarbons as mentioned above, especially ethane, propane, naphtha (including bionaphtha) and mixtures thereof.

The feed gas A may comprise in addition to at least one gaseous reactant (in case of the preferred reactions (i) and (ii) in addition to at least one hydrocarbon) at least one inert gas ((for example in methane pyrolysis (preferred reaction (i)) $H_2$ or $N_2$ as inert gas).

In a preferred embodiment, especially in the case of methane pyrolysis (preferred reaction (i)), the feed gas A comprises $H_2$, preferably 5 to 98 vol%, more preferably 10 to 95 vol%, most preferably 20 to 95 vol% $H_2$ and 2 to 95 vol%, preferably 5 to 90 vol%, most preferably 5 to 80 vol% of at least one gaseous reactant, preferably of at least one hydrocarbon, based the total volume of the feed gas A.

According to the present invention, the zone of the reactor, wherein the reaction of the feed gas A in the presence of the solid particles P takes place is generally called "reaction zone".

According to the present invention, the temperature in the reaction zone (during the reaction of the feed gas A in the presence of the solid particles P) is generally 500 to 2000°C, preferably 1000 to 1600°C, more preferably 1200 to 1500°C. The pressure in the reactor is generally 1 to 100 bar, preferably 5 to 50 bar.

The gaseous residence time in the reaction zone (during the reaction of the feed gas A in the presence of the solid particles P) is 0.1 to 600 s, preferably 0.2 to 60 s.

A particularly preferred embodiment of the invention relates to a hydrocarbon pyrolysis process. Suitable and preferred hydrocarbons are mentioned above. Hydrocarbon pyrolysis is a technology that splits hydrocarbons, especially aliphatic hydrocarbons such as methane, ethane, propane and/or butane directly into hydrogen and solid carbon. Most often, natural gas comprising methane is used as feedstock for methane pyrolysis. For methane, the pyrolysis proceeds according to the following main reaction:

$$CH_4 \rightarrow C + 2\,H_2$$

The process is moderately endothermic (standard reaction enthalpy: 74.91 kJ/mol of $CH_4$). It is evident from the reaction equation above that in hydrocarbon pyrolysis, the release of greenhouse gases is prevented. Therefore, in the event that the energy used in the pyrolysis reaction (e.g. electric energy in an electrically heated pyrolysis) originates from renewable resources, hydrocarbon pyrolysis is a $CO_2$-free, i.e., clean technology to obtain emission-free hydrogen. It is also possible to use a non-fossil hydrocarbon feedstock like biomethane. Hydrocarbon pyrolysis is a one-step process which produces hydrogen in high volume.

As the energy demand of the hydrocarbon pyrolysis contributes to the energy-penalty of the carbon fixture, a hydrocarbon pyrolysis process having an as high as possible energy efficiency is preferred. Moving carbon bed hydrocarbon pyrolysis is preferred due to several aspects, such as higher hydrogen yields.

The obtained solid carbon can be sold as a commercial product for selected applications, depending on the carbon morphology and physical/chemical properties. For example, the solid carbon from hydrocarbon pyrolysis may be used for aluminum and steel production, tire manufacturing, electrode manufacturing, polymer blending, additive for construction materials, carbon devices like heat exchangers, soil conditioning, or storage.

Carbon particles can act as the electrically conductive particles (in case of electric heating, preferably direct electric heating) and as substrate for the deposition of carbon generated by the decomposition of the hydrocarbon compounds. The carbon particles can either be porous or non-porous and can be a granular or powder-like material. The particle size of a preferred support substrate is in the range of 0.3 to 20 mm, preferably 0.5 to 15 mm, more preferably 1 to 10 mm.

Suitable reaction temperatures are mentioned above. The pyrolysis is preferably carried out at temperatures ranging from 700 to 2000°C. The pressure preferably ranges from 1 to 100 bar.

A preferred pyrolysis method comprises the steps of:

a) pyrolysis of hydrocarbons over a moving bed of carbonaceous particulates, preferably carbon particles, whereby carbon is deposited on the surface of the carbonaceous particulates;

β) recovering a stream of hydrogen-containing gas;

γ) directing the stream of hydrogen-containing gas to a gas separation unit to obtain pure hydrogen and hydrogen-depleted gas;

δ) recirculating the hydrogen-depleted gas to the reactor;

ε) flushing the of carbonaceous particulates, preferably carbon particles, with a gas different from the hydrocarbons (feed gas A);

ζ) withdrawing the flushed carbonaceous particulates, preferably carbon particles at the bottom of the reactor; and optionally

η) classifying the withdrawn particles, preferably via sieving;

θ) discharging a fraction of withdrawn particles as a product;

I) recirculating a fraction of withdrawn particles directly to the reactor, and optionally

κ) treating, e.g sieving and/or activating a fraction of withdrawn particles and recirculating the treated and/or activated fraction to the reactor.

In the preferred hydrocarbon pyrolysis process, a stream of a hydrocarbon comprising feed gas A enters the reactor where it is thermocatalytically decomposed (pyrolyzed) over the moving bed of the carbonaceous particles.

According to a preferred hydrocarbon pyrolysis process of the present invention, carbonaceous particles are fed to the reactor at the top of the particle bed and slide downwardly under gravitational field as a continuous column. The carbonaceous particulates, preferably carbon particles, whereby carbon is deposited on the surface of the carbonaceous particulates are flushed with a gas B different from the hydrocarbon comprising gas (feed gas A), preferably with $H_2$, and then withdrawn at the bottom of the reactor. Subsequently, the withdrawn particles may be classified, i.e., sorted by their particle size, into fractions. A (coarse) fraction of the withdrawn particles is discharged as a product. A (middle-sized) fraction of the withdrawn particles is fed directly back into the inlet. A (fine) fraction of the withdrawn particles may be treated, e.g., ground into fine powder in a grinder and sieved, activated and/or formulated and recirculated to the reactor.

The gaseous residence time within the reaction zone is in the preferred hydrocarbon pyrolysis process (i) 0.1 to 600 s, preferably 1 to 60 s.

A hydrogen-containing gas is withdrawn from the reactor.

In the meaning of the present application:

- the solid particles P are generally the solid particles before reaction of the feed gas A;
- the solid particles S are generally the solid particles after contact with the feed gas A comprising feed gas A in its void volume;
- the solid particles D are generally the solid particles after displacement of at least a part of the feed gas A in the void volume of the solid particles S by addition of the gas B.

Further, in the meaning of the present application:

- the feed gas A is generally the gas added to the reactor/process before reaction;
- the product gas G is generally the gas obtained in the reactor/process after reaction;

- the gas B is generally the gas added for displacement of at least a part of the feed gas A in the void volume of the solid particles S, whereby the solid particles D are obtained.

The kind of the solid particles depends on the reaction carried out according to the present invention, the reactor as well as on the heat source used. The solid particles P may be one single type of particles or a mixture of two or more different types of particles. The particles may for example differ in form, size and/or chemical composition. Generally, the solid particles P form a particle bed.

The solid particles P may be in the form of powders, granular materials, pelletized materials and other forms of particulate matter like e.g. fines.

The solid particles P may be spherical particles, non-spherical particles or mixtures thereof.

Furthermore, the particle size of the solid particles P can be selected depending on the reactor requirement. For example, rapid heating is advantageous, in which particle sizes in the range of at most 5 mm for efficient direct heat transfer between the gas phase and the solid phase. Low heating times of 0.1 s to 1 s are thus possible. Furthermore, according to one embodiment, a monomodal particle size distribution of the solid particles P also proves to be advantageous since this leads to homogeneous heating and approximately to a plug flow, without demixing by partial fluidization.

In case of an electric resistance heating, the solid particles P comprise electrically conductive particles through which an electric current flows. The particle bed must contain a sufficient proportion of electrically conductive particles to ensure macroscopic electrical conductivity of the particle bed and allow for the passage of an electrical current through the bed. The proportion of electrically conductive particles in the particle bed can be in the range between 5% and 100%, preferably between 20% and 100 %, most preferably between 50 and 100% by volume, based on the total volume of the solid particles. In any event, the conductivity, and the nature of the conductive particles constituting the particle bed, will depend largely on the reaction being carried out. The solid particles P can be intrinsically electrically conductive or be rendered conductive by the reactive deposition of an electrically conducting material, e.g., carbon, or by the adsorption or absorption of a polar liquid such as water.

In case of an electric resistance heating, the solid particles P generally form a particle bed, and a voltage is applied across at least a portion of the bed to induce an electric current flowing through the bed.

In one embodiment, the solid particles P contain chemically active particles. Chemically active particles include catalytically active particles, reactants of a chemical conversion or carriers for deposition of products of the chemical conversion. Catalytically active particles exert a catalytic activity on the chemical conversion. The chemically active particles may be reactants in the reaction according to the present invention.

Further, the electrically conductive particles themselves may be chemically active or may be essentially catalytically inert. The electrically conductive particles may be admixed with non-conductive particles. The non-conductive particles may be chemically active particles.

In another embodiment, the solid particles P are selected from adsorbents and absorbents, such as superabsorbent polymers, comprising varying degrees of moisture.

Preferably, the solid particles P consist of or comprise electrically conductive particles as explained above.

In a further preferred embodiment, the solid particles P are selected from carbonaceous material, one or more metals, ceramic, silicon carbide particles, and mixtures thereof, preferably carbonaceous material.

Preferred carbonaceous material is a macro-structured carbonaceous material, more preferably a macro-structured carbonaceous material having a porosity in the range of 1 to 70 vol%, based on the total volume of the carbonaceous material, most preferably having a carbon content of 90 wt% to 100 wt%, based on the total mass of solid carbonaceous material.

Suitable carbonaceous material may include particles of char or coke, in particular graphite particles. Suitable metals (metallic particles), may be metallic throughout or have a metallic coating over a non-metallic core. Metallic particles include conductive prereduced oxidic particles. Ceramic particles include for example $Al_2O_3$.

The solid particles S are obtained after contact of the feed gas A with the solid particles P. The solid particles S comprise feed gas A in its void volume.

The solid particles D are obtained after displacement of at least a part of the feed gas A in the void volume of the solid particles S.

In case of a preferred reaction (i) according to the present invention, i.e. a hydrocarbon pyrolysis, especially methane pyrolysis over solid particles P (as a particle bed), as the hydrocarbon pyrolysis reaction occurs, a solid carbon product (pyrolysis carbon) is formed and generally precipitates and deposits on the surface of the solid particles P, whereby the solid particles S are formed. As the carbon builds up on the solid particles P, generally the diameter of the solid particles S is increased over the diameter compared with the solid particles P.

According to the present invention, the feed gas A in the void volume of the solid particles S is reduced by addition of the gas B and the solid particles D are obtained. The solid particles D preferably comprise carbon, more preferably pyrolysis carbon.

To isolate the pyrolysis carbon, the carbon-rich solid particles D are generally continuously removed from the reactor or from the vessel connected with the end, preferably the bottom of the reactor. This can for example be done using a particle recycle loop that transfers the particles to a separate vessel or collection system. In the separate vessel, the pyrolysis carbon can be further processed, such as by heating to higher temperatures to increase its purity and graphitization. The cleaned particles can then be returned to the reactor for reuse. By continuously removing the carbon-rich particles and replenishing with fresh bed material, a steady-state operation can be maintained, allowing for continuous production of hydrogen gas and isolation of the pyrolysis carbon.

In case of a preferred reaction (ii) according to the present invention, i.e. a cracking of hydrocarbons, generally several compounds deposit on the solid particles P (as a particle bed), as the hydrocarbon pyrolysis reaction occurs, primarily in the form of coke. During cracking, the hydrocarbon feed is generally subjected to high temperatures and interacts with the solid particles P. This interaction breaks down larger hydrocarbon molecules into smaller, more valuable products, while simultaneously generating coke as a by-product. The coke generally forms on the surface of the solid particles P, thereby forming the solid particles S. According to the present invention, the feed gas A in the void volume of the solid particles S is reduced by addition of the gas B and the solid particles D are obtained.

The solid particles D are generally periodically replaced and/or regenerated.

In a preferred process according to the present invention, the feed gas A is contacted with the solid particles P and participates as a starting product in the reaction of producing a product gas G and a solid particles S. The feed gas A in the void volume of the solid particles S is reduced by addition of the gas B and the solid particles D are obtained.

Preferred examples for the preferred inventive process are reactions (i) and (ii) mentioned above.

In reaction (i) (pyrolysis of hydrocarbons, especially methane), hydrocarbon gases (like methane, ethane, propene, ethene and/or butene) and/or hydrogen are obtained as product gas G, especially hydrogen is obtained in the preferred pyrolysis of methane.

In reaction (ii) (hydrocarbon cracking) different gaseous products are generally obtained, like ethene, propene, butene.

The gas B is a gas different from the feed gas A present in the void volume of the solid particles S.

The gas B is preferably selected from the group consisting of hydrogen, waste gas recycled from the reaction, recycled product gas G, nitrogen, air, $CO_2$, or mixtures thereof, more preferably hydrogen, recycled product gas G, waste gas recycled from the reaction or mixtures thereof.

Generally, the recycled product gas G is the gas obtained at the product gas outlet before further purification. However, it is also possible to use the gas after purification as recycled product gas G. Preferably, especially in the case of pyrolysis (reaction (i)), the recycled product gas G comprises hydrogen and generally not reacted hydrocarbons, for example in methane pyrolysis methane. Said product gas is in one preferred embodiment used as gas B.

Generally, the waste gas recycled from the reaction comprises not reacted feed gas A and optionally inert gas, especially hydrogen as inert gas (especially in the preferred hydrocarbon (methane) pyrolysis (i)).

It is generally possible to use nitrogen ($N_2$) or air as gas B. Since nitrogen or air is a non-combustible gas, the solid particles D do not need to be treated by a further gas exchange for security reasons in case that nitrogen or air are used as gas B. However, it has to be dealt with the additional nitrogen or air load in the inventive process. Nitrogen or air are therefore in one preferred embodiment of the inventive process used in alternative ii) of the inventive process. Alternative ii) is discussed below.

It is generally also possible to use carbon dioxide ($CO_2$) as gas B. Also, carbon dioxide is a non-combustible gas, and the solid particles D do not need to be treated by a further gas exchange for security reasons in case that carbon dioxide is used as gas B. However, it has to be dealt with the additional carbon dioxide load in the inventive process. Further, carbon dioxide takes part in the Boudouard reaction ( $2CO_2 \rightleftharpoons 2CO + O_2$ ), generally at $\geq 800°C$. However, this is not preferred in the inventive process.

It is therefore preferred to use hydrogen or a hydrogen comprising gas (e.g. recycled product gas G or waste gas recycled from the reaction) as gas B, in alternative a) as well as in alternative b) of the inventive process, but especially in alternative a) of the inventive process. Alternatives a) and b) are discussed below. Hydrogen is indeed a combustible gas which must be exchanged in the void volume of particles D outside the reactor for safety reasons, but hydrogen has the advantage that it does not interfere with the process according to the invention (especially in the case of the preferred hydrocarbon pyrolysis (i), wherein hydrogen is obtained as a product) and can also already be present as a diluent gas in the feed gas A. Furthermore, hydrogen can be easily displaced by nitrogen. When the displaced hydrogen is burned, only water is produced, i.e. no gas that contributes to the PCF (product carbon footprint). The replacement of hydrogen or the hydrogen comprising gas in the void volume is - also in alternative a) - generally carried out outside the reactor, generally by a process known in the art.

According to the present invention, the inventive process is carried out in a reactor having a start, preferably a top (T) and an end, preferably a bottom (B), wherein the solid particles D in alternative a) are discharged at the end, preferably at the bottom of the reactor via a solid particle outlet or the solid particles S in alternative b) are discharged at the start, preferably at the top and/or at the end, preferably at the bottom of the reactor via a solid particle outlet.

The solid particle outlet is either at the start, preferably at the top of the reactor or at the end, preferably at the bottom or both, at the start, preferably at the top and at the end, preferably at the bottom. Generally, suitable outlets for the solid particles D discharged at the start, preferably at the top and/or at the end, preferably at the bottom of the reactor are known in the art and are generally depending on the reactor.

Preferably, the reactor (R) is a moving bed reactor, a fluidized bed reactor, or a plasma reactor, more preferably a moving bed reactor.

Generally, at the end of the outlet a discharge valve is installed. Suitable discharge valves are for example rotary vales or screw conveyors, preferably rotary valves. This allows controlled removal of the solid particles from the reactor.

In the moving bed reactor, solid particles are generally introduced at the start, preferably at the top of the reactor, pass through the reactor in the direction of gravity, and are discharged via an outlet at the end, preferably at the bottom of the reactor.

The moving bed reactor is operated continuously (continuous moving bed reactor) or discontinuously (discontinuous or batch moving bed reactor).

In a continuous moving bed reactor, solid particles move through the reactor continuously.

In discontinuous or batch moving bed reactors, the solid particles are moved in batches rather than continuously. The process involves loading, processing, and unloading the solid material in separate steps.

The feed gas A flows in the moving bed reactor in a counter-current or co-current direction relative to the solid particles, preferably in a counter-current direction.

In the fluidized bed reactor and in the plasma reactor, solid particles are generally fluidized and expanded by flowing gas, preferably by upward-flowing gas. Particle discharges typically occur:

I. Finer particles are generally carried away with the gas at the start, preferably at the top of the reactor and are generally separated in a downstream separator like a cyclone or a filter from the gas stream.
II. In addition, excess particles may be regularly removed through a particle outlet at the end, preferably at the bottom of the reactor.

The outlet at the end, preferably at the bottom of the reactor may generally comprise a downpipe before (in the direction of flow of the particles) entering the next process step (i.e. the particles leave the reactor through a downpipe). Suitable discharge valves are mentioned above. The downpipe is also known as solid outlet pipe.

Preferably, the solid particle outlet is at the end, preferably at the bottom of the reactor.

The process of the present invention as well as the inventive reactor comprise the following alternatives:

a) the displacement is carried out by addition of the gas B at the end, preferably at the bottom of the reactor between the feed gas inlet and the solid particle outlet; or
b) the displacement in carried out by addition of the gas B to a vessel outside the reactor, the vessel being connected with the solid particle outlet at the start, preferably at the top and/or at the end, preferably at the bottom of the reactor.

*a) The displacement is carried out by addition* of *the gas B at the end, preferably at the bottom of the reactor between the feed gas inlet and the solid particle outlet:*
The reactor according to alternative a) is characterized by two separate gas inlets to the reactor, one gas inlet A for the feed gas A and one gas inlet B for the gas B, leading to that particles exiting the reactor will reside for a given period in an atmosphere of the gas B.

A preferred reactor according to the present invention, especially for carrying out the inventive process, is cylindrical. In the preferred case, wherein the feed gas A flows from the bottom up to the top, and the solid particles flow from the top down to the bottom the reactor more preferably having a lower part which is conical (also called "hopper"). However, other reactor geometries known in the art (further examples are mentioned below) are also suitable for the inventive process and the inventive reactor.

According to the present application, the "lower part" of the reactor generally means the lower quarter of the reactor, i.e. the lowest 25% or less, e.g. the lowest 25%, preferably the lowest 20% or less, more preferably the lowest 15% or less, most preferably the lowest 10% or less of the total length of the reactor in the direction from the top to the bottom of the reactor.

Examples for generally suitable reactor types are:

- Cylindrical reactors having a uniform cross-section;
- Conical Reactors, often used in conjunction with cylindrical sections (i.e. one form of a multi-zone reactor mentioned below), being for example conical in the lower part of the reactor (hopper) and being preferred in the preferred case, wherein the feed gas A flows from the bottom up to the top, and the solid particles flow from the top down to the bottom;

- Spherical Reactors, are able to minimize surface area-to-volume ratios, which can enhance thermal efficiency;
- Rectangular or Cubic Reactors;
- Multi-Zone Reactors, can have multiple sections with varying geometries (e.g., cylindrical, conical) to optimize different stages of the reaction.

Preferred are conical reactors used in conjunction with cylindrical sections (one form of a multi-zone reactor), more preferably being conical in the lower part of the reactor (hopper). This can facilitate the movement of solid particles.

Further preferably, especially for carrying out the inventive process, the outlet for the solid particles D is in the conical part of the reactor, more preferably at the lowest part of the conical part of the reactor, most preferably, the outlet for the solid particles is present after a downpipe.

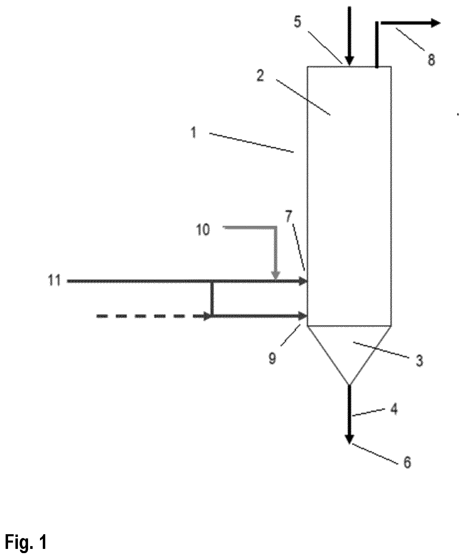

Preferably, the feed gas A is added in the inventive reactor and in the inventive process at an inlet at the bottom of the reactor and ascends in the direction of the top of the reactor, and the gas B is added at an inlet at the bottom of the reactor between the inlet A of the feed gas A and the outlet for the solid particles D. More preferably, the inlet of the gas B - at the bottom of the inventive reactor and in the inventive process - is at the lower part of the cylindrical part of the reactor, in the conical part of the reactor, or in the downpipe (see for example Fig. 1, 2 and 3, mentioned below), most preferably, the gas inlet B is in the downpipe of the reactor.

Further preferably, the location of the inlet of feed gas A is in the cylindrical part or the conical part of the reactor and the inlet of gas B is in the downpipe, more preferably, the location of the inlet of feed gas A is in the cylindrical part of the reactor and the inlet of gas B is in the downpipe.

*b) The displacement is carried out by addition of the gas B to a vessel outside the reactor, the vessel being connected with the solid particle outlet at the start, preferably at the top and/or at the end, preferably at the bottom of the reactor*

In a further embodiment of the inventive process and the inventive reactor, the gas B is added in a vessel outside the reactor. Said vessel is connected with the solid particle outlet of the reactor at the start, preferably at the top and/or at the end, preferably at the bottom of the reactor. In this case, the solid particles S are collected in said vessel (or in case of a solid particle outlet at the start, preferably at the top and at the end, preferably at the bottom of the reactor two vessels may be connected with the solid particle outlet, one vessel at the start, preferably at the top and one vessel at the end, preferably at the bottom) and the displacement of at least a part of the feed gas A in the void volume of the solid particles S with a gas B different from said feed gas A is carried out in said vessel(s), or, in case that the solid particles S leave the reactor at the start, preferably at the top together with the product gas G, the solid particles and the product gas are preferably separated in a 1st vessel and the solid particles are purged in a 2nd vessel with the gas B.

The gas obtained after the displacement (purge) of at least a part of the feed gas A in the void volume of the solid particles S with a gas B is in alternative a) and in alternative b) preferably recirculated into the reactor, more preferably together with the feed gas A via the inlet for the feed gas A.

The solid particles (depending on the specific embodiment of the present process the solid particles S or D) preferably having a specific mass flux at the outlet of the solid particles at the bottom and/or at the top of the reactor, preferably at the bottom of the reactor, of 500 to 30000 kg/(hm$^2$), more preferably 1000 to 20000 kg/(hm$^2$), most preferably 3000 to 10000 kg/(hm$^2$). The specific mass flux is calculated with the mass flux related to the cross section at the maximum diameter of the reactor in the reaction zone.

The product gas G preferably having a specific mass flux at the outlet at the top of the reactor of 100 to 5000 kg/(hm$^2$), more preferably 200 to 4000 kg/(hm$^2$), most preferably 300 to 2500 kg/(hm$^2$).

The rinse mass flow fraction, i.e. the ratio between the mass flow of gas B and the mass flow of feed gas A is generally 0.0005 to 0.1, preferably 0.001 to 0.05, more preferably 0.002 to 0.01.

A flux of a quantity is defined as the amount of that quantity that is transported per unit time across a unit area that is perpendicular to the direction of transport. Thus, specific mass flux is defined as the amount of mass transported per unit time across a unit area that is perpendicular to the direction of mass transport.

The mass flux can for example be determined by measuring the mass flow (also: mass flow rate) and dividing it by the area through which the mass is flowing. Mathematically, this is expressed as:

$$j_{m=}\frac{I_m}{A}$$

$j_m$ is the mass flux,
$I_m$ is the mass flow rate (mass per unit time),
$A$ is the area through which the mass flows.

For example, in a reactor with a cross-sectional area $A$ and a fluid with mass flow rate $I_m$ passing through it, the mass flux $j_m$ can be calculated by dividing the mass flow rate by the cross-sectional area of the reactor.

The mass flow (or mass flow rate) is the measure of the movement of a mass per unit of time. This mass is represented by the number of molecules in a substance. The mass of a gas does not change with changes in temperature and pressure, the weight remains the same. The mass throughput can be expressed by kg/s.

The mass flow (or mass flow rate) of the solid material particles and of the feed gas and the product gas is in each case determined by processes known in the art, usually with a mass flow meter.

The mass flow of gases can be measured using MFCs (mass flow control), differential pressure measurement (via nozzle, Venturi tube, orifice) or there are also ultrasonic flow meters. In addition, there are also impeller flow meters, vortex flow meters and Coriolis flow meters.

The mass flow of solids can be measured by weighing-based flow measurement devices (they directly measure the mass of the material as it flows through the flow meter). Other methods, such as the inertial-based flow measurement devices or ultrasound/microwave-based level measurement devices, can also be used for solids but may require additional considerations and calibration to accurately measure the mass flow.

The feed gas A is introduced into the reactor, generally having a temperature of 10 to 200°C, preferably 20 to 100 °C.

The solid particles P are introduced into the reactor, generally having a temperature of 10 to 200°C, preferably 20 to 100 °C.

The reaction according to the present invention can either be exothermic or endothermic. In the case of endothermic reactions, the supply of heat is required. The method of supplying heat is not particularly restricted and different concepts can be used. The heat source can for example be combustion heating or electric heating.

Preferably, the heating means envisaged in the present invention are electrical heating means. Preferably, the reactor is therefore electrically heated.

The use of electric energy as a heat source instead of for example heating by combustion of natural gas allows considerable advantages, in particular with regard to the ease of control. The use of electricity offers opportunities for the use of compact, modular, high performance and energy efficient reactors. When the electricity derives from a non-fossil resource, the endothermic unit operation can be implemented without net emission of carbon dioxide. The heating energy can be generated directly in the bed or in separate heating elements. Direct electrical heating (electric resistance heating) is preferred.

Therefore, in one preferred embodiment, the electric current concurrently provides electric resistance heating to the unit operation. This means the electric current passed through the electrically conductive bed generates thermal energy.

In another embodiment, heat can be provided by inductive heating.

In another embodiment, heat can be provided to the unit operation by preheating a fluid that is designed to flow through the bed, e.g., a gaseous reactant stream.

The different concepts of supplying heat may be combined. For example, the thermal energy generated by passing the current through the electrically conductive bed may be supplemented by other heat sources.

In the preferred electric resistance heating, a voltage is applied across at least a portion of the bed to induce an electric current flowing through the bed. The electrical power is generally supplied through a plurality of electrodes (two or more) that are in an electrically conductive relationship with the bed, e.g., immersed in the particle bed or electrically connected to the regular structure.

The electrodes may be made of a metal, graphite or any other suitably conductive material. Various composite refractory materials, for example containing graphite or metal, may be employed.

Preferably, a pair of axially spaced electrodes is employed, i.e., upper and lower electrodes. Alternatively, a radial electrode arrangement may be contemplated with a central electrode extending along the axis of the reactor and a generally cylindric counter electrode or a pair of concentric cylindrical electrodes with a cylindrical inner electrode and a cylindrical outer electrode so that an electric current is induced to flow through the bed in a radial direction between electrodes.

The shape of the electrodes is not particularly limited. Preferably, the electrodes are designed to achieve a uniform current distribution within the particle bed. Preferably, the electrodes take the shape of a grid or of rods. Suitable electrode assemblies are described in WO 2019/145279 A1.

When rods are used, each electrode preferably comprises a number of rods distributed across the cross section of the particle bed. Electrode rods that run to a point are particularly advantageous. Preferably, the upper and lower electrode rods run to a point on the side toward the heated zone. The tip may be conical or wedge-shaped. Correspondingly, the end of the rod may take the form of a dot or a line. The rod electrodes are connected to the hood in an electrically conductive manner and are jointly supplied with electrical power via the hood.

Preferably, the electrodes take the form of a grid. For grid form, various configuration variants are conceivable, for example grids in honeycomb form composed of advantageously regular polygons, rectangular grids formed from parallel bars, grids in the form of spokes or grids composed of concentric rings. Particular preference is given to grids in the form of spokes and grids composed of concentric rings.

The potential or voltage may arise from an A.C. or D.C. source. Advantageously, a potential difference (voltage) of 1 volt to 10000 volts, preferably of 10 volts to 5000 volts, more preferably of 50 volts to 1000 volts, is applied. The electrical field strength between the hoods is advantageously in the range of 1 V/m to 100 000 V/m, preferably 10 V/m to 10000 V/m, more preferably 20 V/m to 5000 V/m, especially 30 V/m to 1000 V/m.

The specific electrical conductivity of the bed is advantageously from 0.001 S/cm to 60 MS/m, preferably from 1 MS/m to 50 MS/m (e.g. metallic catalysator) and from 0.01 S/cm to 300 S/cm, especially from 0.1 S/cm to 100 S/cm (carbon bed).

This advantageously results in an electric current density in the bed of 0.01 $A/cm^2$ to 100 $A/cm^2$ and higher, preferably from 0.05 $A/cm^2$ to 50 $A/cm^2$, especially from 0.1 $A/cm^2$ to 10 $A/cm^2$.

In a preferred process of the present invention, the solid particles P and feed gas A are counter-currently driven, wherein

the solid particles P are introduced at the top of the reactor at an inlet and pass through the reactor in the direction of gravity,

the feed gas A is introduced at the bottom at an inlet and ascends from there into a reaction zone,

in the reaction zone, the feed gas A is contacted with the solid particles P and the feed gas A reacts for producing a product gas G,

the product gas G ascends in direction of the top of the reactor, counter-currently to the solid particles P, wherein

the solid particles P are heated by the counter-current product gas G, and

the feed gas A is heated by the solid particles P obtained after contact with the feed gas A moving towards it, wherein the solid particles P comprising feed gas A in its void volume are defined as solid particles S, wherein

the product gas G leaves the reactor at an outlet at the top of the reactor, wherein

the gas B is preferably added at an inlet at the bottom of the reactor,

wherein the feed gas A in the void volume of the solid particles S is displaced by addition of the gas B and solid particles D are obtained having a reduced amount of the feed gas A in the void volume, which solid particles D are discharged from the reactor at an outlet at the bottom of the reactor;

wherein the inlet for the gas B is between the feed gas inlet A and the outlet for the solid particles D.

Further details regarding the process are mentioned above and below.

In case of a counter-currently driven process/reactor, the product gas leaving G the reactor, generally having a temperature of 10 to 250°C, preferably 100 to 2000°C.

In case of a counter-currently driven process/reactor, the solid particles leaving the reactor, generally having a temperature of 10 to 200°C, preferably 40 to 100°C.

The present invention further relates to a reactor (R) for a reaction of a feed gas A in the presence of solid particles P, preferably a pyrolysis, more preferably a methane pyrolysis, wherein solid particles S are obtained comprising feed gas A in its void volume, preferably for carrying out the inventive process,

the reactor having a start and an end, wherein the start is preferably a top (T) and the end is preferably a bottom (B) and a solid particle outlet at the end, preferably at the bottom and/or at the start, preferably at the top of the reactor, more preferably at the end, most preferably at the bottom, and having

either an inlet for a gas B for displacement of the feed gas A in the void volume of said solid particles S for obtaining solid particles D having a reduced amount of feed gas A in a void volume, at the end, preferably at the bottom of the reactor between a feed gas inlet A and the solid particle outlet,

or having an inlet for a gas B for displacement of the feed gas A in the void volume of said solid particles S for obtaining solid particles D having a reduced amount of feed gas A in a void volume in a vessel, wherein the solid particles S are collected in the vessel, the vessel being connected with the solid particle outlet at the start, preferably at the top and/or at the end, preferably at the bottom of the reactor.

Preferably, the reactor comprises an inlet for the addition of feed gas A at the bottom of the reactor, wherein the feed gas A ascends in the direction of the top of the reactor, and an inlet for the gas B at the bottom of the reactor between the inlet A for the feed gas A and the outlet for the solid particles D or S. Generally, the inlet for the gas B is - in flow direction of the feed gas A - below the inlet for the feed gas A and above the outlet for the solid particles D or S.

Preferably, the reactor (R) is a moving bed reactor, a fluidized bed reactor, or a plasma reactor. The reactor types are described above.

The solid particle outlet is in the inventive reactor preferably at the end, more preferably at the bottom of the reactor, most preferably, the outlet for the solid particles is present after a downpipe (solid outlet pipe).

More preferably, the main body of the inventive reactor is cylindrical, and the reactor having a lower part which is conical, the solid particle outlet is preferably in the conical part of the reactor, more preferably at the lowest part of the conical part of the reactor.

The inlet of the gas B at the bottom of the reactor is at the lower part of the cylindrical part of the reactor, in the conical part of the reactor, or in the downpipe.

More preferably, the invention relates to a reactor (R) for a reaction of a feed gas A in the presence of solid particles P, the reactor being a moving bed reactor,

the reactor having a top (T) and a bottom (B),
wherein the reactor comprises:

an inlet for introducing the solid particles P at the top and for passing the solid particles P through the reactor in the direction of gravity,
an inlet for introducing a feed gas A at the bottom and for ascending of the feed gas A from there into a reaction zone,
wherein
in the reaction zone, the feed gas A is contacted with the solid particles P and the feed gas A reacts for producing a product gas G,
and the product gas G ascends in direction of the top of the reactor, counter-currently to the solid particles P, wherein the solid particles P are heated by the counter-current product gas, and the feed gas A is heated by the solid particles P moving towards it, wherein the solid particles P comprising feed gas A in its void volume are defined as solid particles S,
an outlet for leaving of the product gas G at the top of the reactor, and
an outlet for leaving solid particles D obtained after displacing of at least a part of feed gas A in the void volume of the solid particles S with the gas B at the bottom of the reactor,
wherein
the reactor comprises an inlet for the gas B at the bottom of the reactor between the feed gas inlet A and the outlet for the solid particles D.

Further details regarding the reactor are mentioned above and below.

Preferably, the solid particles P are added to the reactor at the top of the reactor via an inlet as described above. The solid particles D are discharged at the bottom of the reactor according to alternative a) or the solid particles S are discharged at the top and/or at the bottom of the reactor according to alternative b), preferably at the bottom of the reactor, via an outlet as described above.

The feed gas A is preferably added at the bottom of the reactor via an inlet as described above. The product gas G leaves the reactor preferably at the top of the reactor via an outlet as described above.

A definition of the bottom (B) and a definition of the top (T) of the reactor are given above.

According to alternative a), the reactor according to the present invention comprises in addition to a gas inlet for the feed gas A a gas inlet for the gas B. Suitable gas inlets are known in the art.

Preferably, the gas inlet for the feed gas A is present at the bottom of the reactor and the feed gas A ascends in the direction of the top of the reactor. The gas inlet for the gas B is generally - in the direction of flow of the feed gas A - below the gas inlet for the feed gas A.

The main body of the reactor is preferably cylindrical, and the reactor preferably having a lower part which is conical, the outlet for the solid particles D or S is preferably in the conical part of the reactor, more preferably at the lowest part of the conical part of the reactor, wherein the outlet for the solid particles D or S is preferably present after a downpipe.

The inventive process and the inventive reactor are exemplified in the following variants 1 to 5 (as described in Fig. 1 to 5):

In variants 1 to 5, the main body of the reactor is cylindrical, and the reactor having a lower part which is conical (hopper). As mentioned above, other reactor geometries are also generally suitable. Additionally, in variants 1 to 4, the outlet for the solid particles D (variants 1 to 3) or S (variant 4) is at the lowest part of the conical part of the reactor (i.e. the lowest point of the reactor), wherein the outlet for the solid particles D or S is present after a downpipe. Generally, other means can alternatively or additionally be used to remove the solid particles from the reactor. Suitable means for removing the solid particles from the reactor are known in the art. Further additionally, in variants 1 to 3 (alternative a)), the inlet of the gas B is generally at the bottom of the reactor and is preferably at the lower part of the cylindrical part of the reactor (e.g. in the lower quarter of the cylindrical part of the reactor or lower, preferably in the lower 20% of the cylindrical part of the reactor or lower, more preferably in the lower 15% of the cylindrical part of the reactor or lower), in the conical part of the reactor, or in the downpipe.

Variants 1, 2 and 3 (Fig. 1, 2 and 3) are variants of alternative a) and variants 4 and 5 (Fig. 4 and 5) are variants of alternative b).

Variant 1 (Fig. 1):

In variant 1, the gas inlet for the feed gas A is present at the bottom of the reactor in the cylindrical part of the reactor and the feed gas ascends in the direction of the top of the reactor. The gas inlet for the gas B is in the cylindrical part of the reactor between the gas inlet for the feed gas A and the solid particle outlet, i.e the gas inlet for the gas B is - in the direction of flow of the feed gas A - below the gas inlet for the feed gas A in the cylindrical part of the reactor.

The numbers in Fig. 1 have the following meaning:

1 Reactor
2 Cylindrical part of the reactor
3 Conical part of the reactor (hopper)
4 Downpipe
5 Inlet for solid particles P
6 Outlet for solid particles D
7 Inlet for feed gas A
8 Outlet for product gas G
9 Inlet for Gas B
10 Inlet for gaseous reactant
11 Inlet for inert gas (optional)

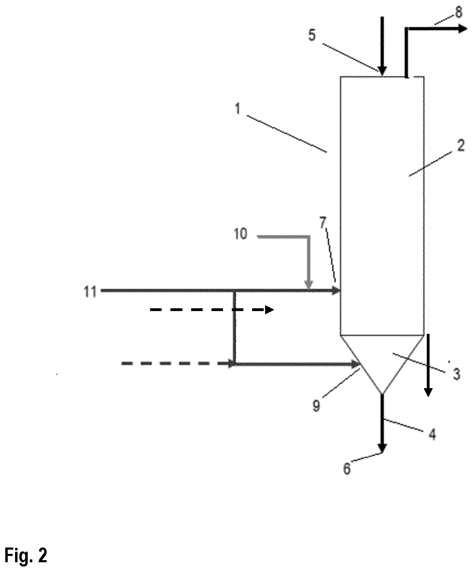

Variant 2 (Fig. 2):

In variant 2, the gas inlet for the feed gas A is present at the bottom of the reactor in the cylindrical part of the reactor and the feed gas ascends in the direction of the top of the reactor. The gas inlet for the gas B is in the conical part of the reactor between the gas inlet for the feed gas A and the solid particle outlet, i.e the gas inlet for the gas B is - in the direction of flow of the feed gas A - below the gas inlet for the feed gas A in the conical part of the reactor.

The numbers in Fig. 2 have the following meaning:

1 Reactor
2 Cylindrical part of the reactor
3 Conical part of the reactor (hopper)
4 Downpipe
5 Inlet for solid particles P
6 Outlet for solid particles D
7 Inlet for feed gas A
8 Outlet for product gas G
9 Inlet for Gas B
10 Inlet for gaseous reactant
11 Inlet for inert gas (optional)

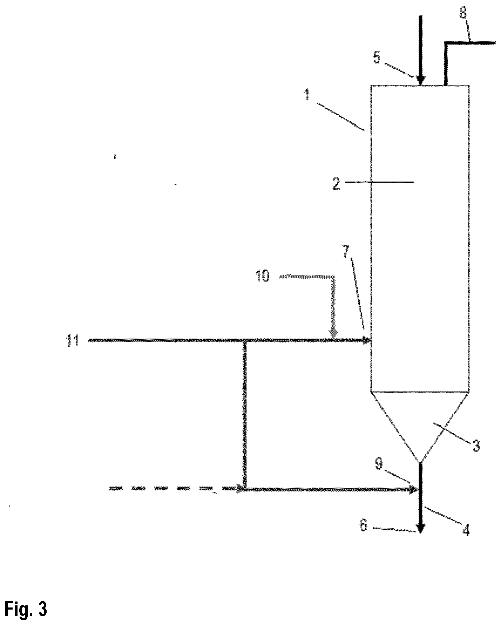

Variant 3 (Fig. 3):

In variant 3, the gas inlet for the feed gas A is present at the bottom of the reactor in the cylindrical part of the reactor and the feed gas ascends in the direction of the top of the reactor. The gas inlet for the gas B is in the downpipe between the gas inlet for the feed gas A and the solid particle outlet, i.e the gas inlet for the gas B is - in the direction of flow of the feed gas A - below the gas inlet for the feed gas A in the downpipe.

The numbers in Fig. 3 have the following meaning:

1 Reactor
2 Cylindrical part of the reactor
3 Conical part of the reactor (hopper)
4 Downpipe
5 Inlet for solid particles P
6 Outlet for solid particles D
7 Inlet for feed gas A

EP 4 775 534 A1

8 Outlet for product gas G
9 Inlet for Gas B
10 Inlet for gaseous reactant
11 Inlet for inert gas (optional)

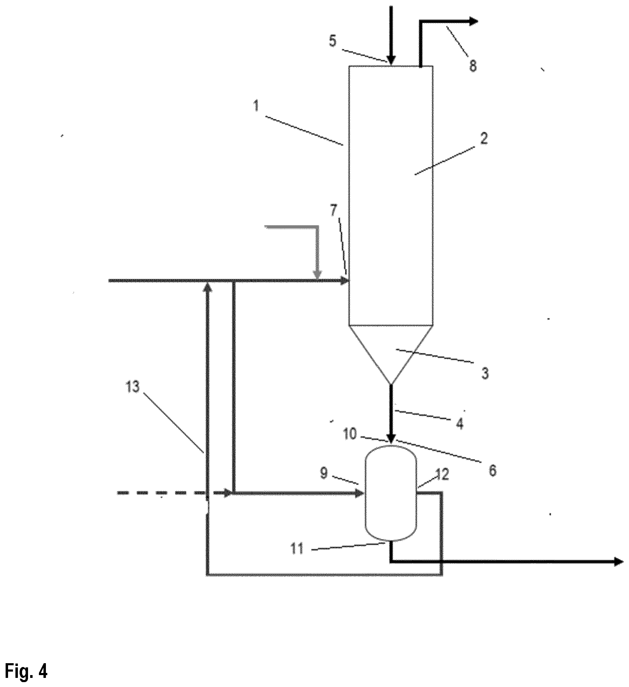

Variant 4 (Fig. 4):

In variant 4, the gas inlet for the feed gas A is present at the bottom of the reactor in the cylindrical part of the reactor and the feed gas ascends in the direction of the top of the reactor. The solid particle outlet at the bottom of the reactor is connected, preferably via a downpipe, with a vessel. The vessel comprises a gas inlet for the gas B, an outlet for the solid particles D, an outlet for the gas obtained after displacement of at least a part of the feed gas A in the void volume of the solid particles S (purge gas) and a return feedline of the purge gas.

The numbers in Fig. 4 have the following meaning:

1 Reactor
2 Cylindrical part of the reactor
3 Conical part of the reactor (hopper)
4 Downpipe
5 Inlet for solid particles P
6 Outlet for solid particles S
7 Inlet for feed gas A
8 Outlet for product gas G
9 Inlet for Gas B in the vessel
10 Inlet for solid particles S in the vessel
11 Outlet for solid particles D in the vessel
12 Outlet for the gas obtained after displacement of at least a part of the feed gas A in the void volume of the solid particles S (purge gas) in the vessel
13 Return feedline of the purge gas from the vessel to the inlet 7

The reactor in variants 1 to 4 is preferably a moving bed reactor or a fluidized bed reactor, more preferably a moving bed reactor.

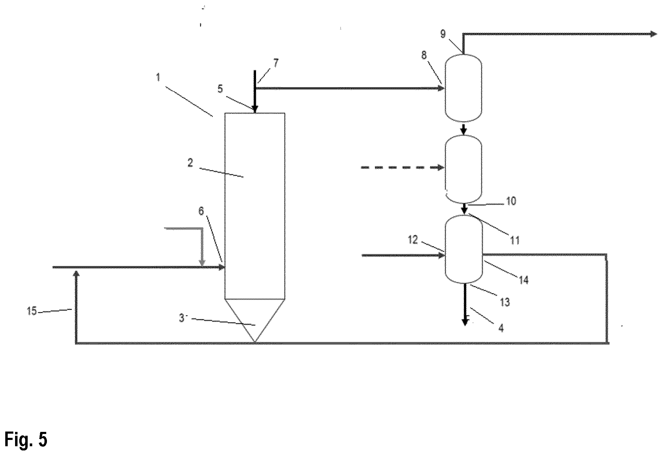

Variant 5 (Fig. 5):

In variant 5, the gas inlet for the feed gas A, preferably in form of a plasma gas, is present at the bottom of the reactor in the cylindrical part of the reactor and the plasma gas ascends in the direction of the top of the reactor. During reaction a product gas G and solid particles S are formed. The product gas G leaves the reactor together with solid particles S at the top of the reactor and is collected in a 1st vessel connected with the top of the reactor. In the 1st vessel the product gas G and the solid particles S are separated as known in the art. The product gas G and the separated solid particles S leave the first vessel at separate outlets, and the separated solid particles S are collected in a 2nd vessel connected with the 1st vessel. The 2nd vessel comprises a gas inlet for the gas B, an outlet for the solid particles D, an outlet for the gas obtained after displacement of at least a part of the feed gas A in the void volume of the solid particles S (purge gas) and a return feedline of the purge gas.

The numbers in Fig. 5 have the following meaning:

1 Reactor
2 Cylindrical part of the reactor
3 Conical part of the reactor (hopper)
4 Downpipe
5 Inlet for solid particles P
6 Inlet for feed gas A
7 Outlet for product gas G and the solid particles S
8 Inlet for product gas G and the solid particles S in the 1st vessel
9 Outlet for product gas G in the 1st vessel
10 Outlet for the solid particles in the 1st vessel connected with 11
11 Inlet for the solid particles in the 2nd vessel connected with 10
12 Inlet for Gas B in the 2nd vessel
13 Outlet for solid particles D in the 2nd vessel

16

14 Outlet for the gas obtained after displacement of at least a part of the feed gas A in the void volume of the solid particles S (purge gas) in the 2<sup>nd</sup> vessel

15 Return feedline of the purge gas connected with 6

The reactor in variant 5 is preferably a plasma reactor.

**Examples**

In the following exemplary simulations, the effects of the present invention are illustrated. In said simulations, the flow behavior in a methane pyrolysis reactor with two inlets to achieve a purely hydrogen atmosphere (as example for a gas B) in the region where particles exit the reactor (solid particle outlet) is studied.

A two-dimensional axis-symmetric setup was chosen with a steady state approach, without considering the temperature profile and with uniform pressure.

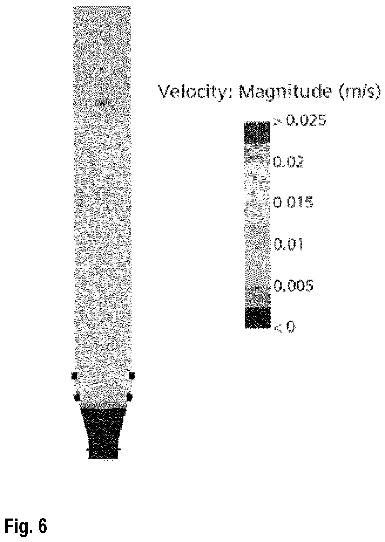

The operation conditions are shown in Fig. 6. The different shades of gray indicate the different gas velocities in the reactor.

A mixture of $H_2$ and $CH_4$ (feed gas A) at one upper active inlet using mole fractions of 0.8 ($H_2$), 0.2 ($CH_4$) respectively as a volume flux of 8900 $Nm^3/h$ is considered.

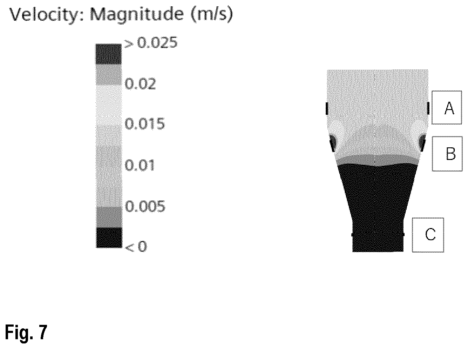

The location of the different inlets for feed gas A and gas B is shown in Fig. 7. The different shades of gray indicate the different gas velocities in the reactor.

Three inlets are considered in different combinations

- Inlet A on the side of the reactor wall
- Inlet B on the hopper
- Inlet C in the solid outlet pipe of the reactor

Three different configurations are considered, focus is given on Setup II using inlet A and C

| Configuration | Inlet A | Inlet B | Inlet C |
|---|---|---|---|
| Setup I | | x | x |
| Setup II | x | | x |
| Setup III | x | x | |

The upper inlet is the inlet for the feed gas A and the lower inlet is the inlet for the gas B, i.e. at the active bottom inlet a rinse flow of $H_2$ is introduced using a fraction of the mass flux applied above.

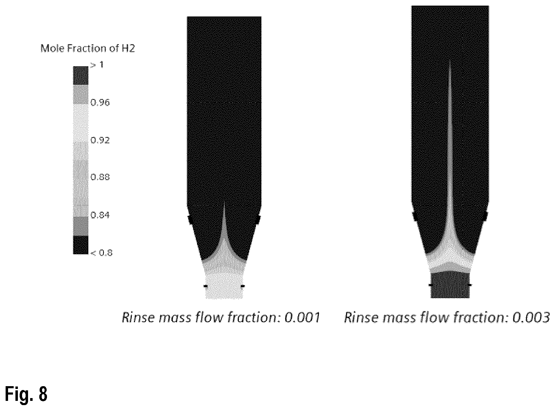

The results are shown in the following figures 8, 9 and 10.

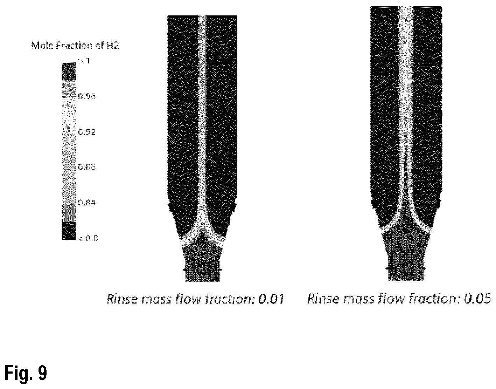

Fig. 8 and 9 show the influence mass flux fraction of rinse flow. The different shades of gray indicate the different mole fractions of $H_2$ in the reactor.

At rinse mass flow fractions of 0.001 molar fractions of $H_2$ below 0.96 are observed in the solid outlet pipe (downpipe).

At rinse mass flow fractions of 0.003 molar fractions of $H_2$ above 0.98 are obtained in the solid outlet pipe (downpipe).

At rinse mass flow fractions of 0.01 and 0.05 the higher $H_2$ molar fractions from the reactor bottom are condensed in the reactor axis and result in a streak of molar fractions of $H_2$ above 0.84 at the reactor axis. The intensity of the stream depends on the specific operation condition in question.

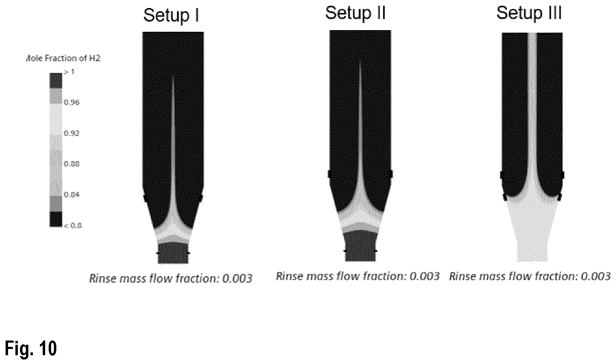

Fig. 10 shows the influence of the location of the inlets. The different shades of gray indicate the different mole fractions of $H_2$ in the reactor.

Setup I and Setup II lead to $H_2$ mole fractions above 0.98 in the solid exit pipe (downpipe).

Setup III exhibits $H_2$ mole fractions below 0.94 in the solid exit pipe (downpipe) and large parts of the hopper cone (conical part of the reactor).

The simulations show that the feed gas A in the lower part of the reactor is at least partially displaced by the gas B. The displacement of the feed gas A by the gas B is achieved in the inventive reactor/process.

**Claims**

1. A process for reducing the amount of feed gas A in a void volume of solid particles S, whereby solid particles D are obtained, in a reactor, wherein a reaction is carried out, the reactor having a start and an end, wherein the start is preferably a top (T) and the end is preferably a bottom (B) of the reactor, a feed gas inlet A, a gas outlet, a solid particle inlet and a solid particle outlet, the process comprising

displacement of at least a part of the feed gas A in the void volume of the solid particles S with a gas B different from said feed gas A,
wherein the displacement is carried out by addition of the gas B at the end, preferably at the bottom of the reactor between the feed gas inlet A and the solid particle outlet, wherein the solid particles D are discharged at the end, preferably at the bottom of the reactor via the solid particle outlet,
or
the displacement is carried out by addition of the gas B to a vessel, wherein the solid particles S are collected in the vessel, the vessel being connected with a solid particle outlet at the start, preferably at the top and/or at the end, preferably at the bottom of the reactor.

2. The process according to claim 1, wherein the feed gas A comprises methane, hydrocarbons, in particular $C_2$ to $C_9$ hydrocarbons, or mixtures thereof, preferably methane, ethane, propane, butane, pentane, naphtha or mixtures thereof, more preferably methane, ethane, naphtha or mixtures thereof, most preferably methane.

3. The process according to claim 1 or 2, wherein the reaction is a pyrolysis, preferably a methane pyrolysis and/or wherein the solid particles D comprise carbon, preferably pyrolysis carbon.

4. The process according to any one of claims 1 to 3, wherein the gas B selected from the group consisting of hydrogen, recycled product gas G, waste gas recycled from the reaction, nitrogen, $CO_2$, and mixtures thereof, preferably selected from the group consisting of hydrogen, recycled product gas G, waste gas recycled from the reaction, and mixtures thereof.

5. The process according to any one of claims 1 to 4, wherein the reactor is a moving bed reactor, a fluidized bed reactor, or a plasma reactor.

6. The process according to any one of claims 1 to 5, wherein the solid particle outlet is at the end, preferably at the bottom of the reactor.

7. The process according to claim 6, wherein the reaction is carried out by addition of feed gas A at an inlet A at the end, preferably at the bottom of the reactor and moving, preferably ascending in the direction to the start, preferably the top of the reactor, wherein the gas B is added at an inlet B at the end, preferably at the bottom of the reactor between the feed gas inlet A and the outlet of the solid particles D.

8. The process according to any one of claims 1 to 7, wherein solid particles P and feed gas A are counter-currently driven, wherein

the solid particles P are introduced at the top of the reactor at an inlet and pass through the reactor in the direction of gravity,
the feed gas A is introduced at the bottom at the inlet A and ascends from there into a reaction zone,
in the reaction zone, the feed gas A is contacted with the solid particles P and the feed gas A reacts for producing a product gas G,
the product gas G ascends in direction of the top of the reactor, counter-currently to the solid particles P, wherein the solid particles P are heated by the counter-current product gas G, and
the feed gas A is heated by the solid particles P obtained after contact with the feed gas A moving towards it, wherein the solid particles P comprising feed gas A in its void volume are defined as solid particles S, wherein the product gas G leaves the reactor at the outlet at the top of the reactor,
wherein
the gas B is preferably added at an inlet B at the bottom of the reactor,
wherein the feed gas A in the void volume of the solid particles S is displaced by addition of the gas B and solid particles D are obtained having a reduced amount of the feed gas A in the void volume, which solid particles D are discharged from the reactor at an outlet at the bottom of the reactor;
wherein the inlet B for the gas B is between the feed gas inlet A and the outlet for the solid particles D.

9. A reactor (R) for a reaction of a feed gas A in the presence of solid particles P, preferably a pyrolysis, more preferably a methane pyrolysis, wherein solid particles S are obtained comprising feed gas A in its void volume, preferably for carrying out the process according to any one of claims 1 to 8,

the reactor having a start and an end, wherein the start is preferably a top (T) and the end is preferably a bottom (B) and a solid particle outlet at the end, preferably at the bottom and/or at the start, preferably at the top of the reactor, preferably end, more preferably at the at the bottom, a feed gas inlet A, a gas outlet, and a solid particle inlet, and having
either an inlet B for a gas B for displacement of the feed gas A in the void volume of said solid particles S for obtaining solid particles D having a reduced amount of feed gas A in a void volume, at the end, preferably at the bottom of the reactor between the feed gas inlet A and the solid particle outlet,
or having an inlet C for a gas B for displacement of the feed gas A in the void volume of said solid particles S for obtaining solid particles D having a reduced amount of feed gas A in a void volume in a vessel, wherein the solid particles S are collected in the vessel, the vessel being connected with the solid particle outlet at the start, preferably at the top and/or at the end, preferably at the bottom of the reactor.

10. The reactor (R) according to claim 9, being a moving bed reactor, a fluidized bed reactor, or a plasma reactor.

11. The reactor (R) according to claim 9 or 10, wherein the solid particle outlet is at the end, preferably at the bottom of the reactor.

12. The reactor (R) according to any one of claims 9 to 11, wherein the reactor comprises the inlet A for the addition of feed gas A at the end, preferably at the bottom of the reactor, wherein the feed gas A moves, preferably ascends in the direction of the start, preferably the top of the reactor, and the inlet B for the gas B at the end, preferably at the bottom of the reactor between the feed gas inlet and the outlet for the solid particles D or S.

13. The reactor (R) according to any one of claims 9 to 12, wherein the main body of the reactor is cylindrical, and the reactor having a lower part which is conical, the outlet for the solid particles D is preferably after the conical part of the reactor, more preferably after the lowest part of the conical part of the reactor and/or wherein the outlet for the solid particles is present after a downpipe.

14. The reactor (R) according to claim 13, wherein the inlet B of the gas B is at the bottom of the reactor at the lower part of the cylindrical part of the reactor, in the conical part of the reactor, or in the downpipe.

15. A reactor (R) as claimed in any one of claims 9 to 14, for a reaction of a feed gas A in the presence of solid particles P, the reactor being a moving bed reactor,

the reactor having a top (T) and a bottom (B),
wherein the reactor comprises:

an inlet for introducing the solid particles P at the top and for passing the solid particles P through the reactor in the direction of gravity,
an inlet A for introducing a feed gas A at the bottom and for ascending of the feed gas A from there into a reaction zone,
wherein
in the reaction zone, the feed gas A is contacted with the solid particles P and the feed gas A reacts for producing a product gas G,
and the product gas G ascends in direction of the top of the reactor, counter-currently to the solid particles P, wherein the solid particles P are heated by the counter-current product gas, and the feed gas A is heated by the solid particles P moving towards it, wherein the solid particles P comprising feed gas A in its void volume are defined as solid particles S,
an outlet for leaving of the product gas G at the top of the reactor, and
an outlet for leaving solid particles D obtained after displacing of at least a part of feed gas A in the void volume of the solid particles S with the gas B at the bottom of the reactor,
wherein
the reactor comprises an inlet B for the gas B at the bottom of the reactor between the feed gas inlet and the outlet for the solid particles D.

**Fig. 1**

Fig. 2

**Fig. 3**

**Fig. 4**

Fig. 5

EP 4 775 534 A1

Velocity: Magnitude (m/s)

Fig. 6

25

Fig. 7

Rinse mass flow fraction: 0.001    Rinse mass flow fraction: 0.003

Fig. 8

Rinse mass flow fraction: 0.01    Rinse mass flow fraction: 0.05

**Fig. 9**

Fig. 10

## EUROPEAN SEARCH REPORT

**Application Number**

EP 25 15 1504

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 157 167 B1 (MURADOV NAZIM Z [US]) 2 January 2007 (2007-01-02) * claims; figure 1; examples 1-9 * ----- | 1-15 | INV. C01B3/28 B01J8/12 B01J8/18 C01B3/30 C01B32/05 C01B3/24 B01J19/08 |
| X | US 2010/125159 A1 (NAUNHEIMER CHRISTOPHER [US] ET AL) 20 May 2010 (2010-05-20) * paragraphs [0050], [0055], [0057]; claims 1, 2, 5, 7; figures 1-3 * ----- | 1-15 | |
| X | CA 1 031 539 A (UOP INC) 23 May 1978 (1978-05-23) * sole figure; claims * ----- | 1-15 | |
| A | WO 2024/086782 A2 (MONOLITH MAT INC [US]) 25 April 2024 (2024-04-25) * paragraph [0120]; claims * ----- | 1-15 | |

**TECHNICAL FIELDS SEARCHED (IPC)**

C01B
B01J

The present search report has been drawn up for all claims

| Place of search | Date of completion of the search | Examiner |
|---|---|---|
| The Hague | 16 June 2025 | Engelen, Karen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..............................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 1504

16-06-2025

| Patent document cited in search report | | Publication date | Patent family member(s) | | Publication date |
|---|---|---|---|---|---|
| US 7157167 | B1 | 02-01-2007 | US | 7157167 B1 | 02-01-2007 |
| | | | US | 2002007594 A1 | 24-01-2002 |
| | | | US | 2007111051 A1 | 17-05-2007 |
| US 2010125159 | A1 | 20-05-2010 | NONE | | |
| CA 1031539 | A | 23-05-1978 | AT | 347413 B | 27-12-1978 |
| | | | AU | 7231174 A | 19-02-1976 |
| | | | CA | 1031539 A | 23-05-1978 |
| | | | DE | 2437568 A1 | 27-02-1975 |
| | | | FR | 2240048 A1 | 07-03-1975 |
| | | | GB | 1469562 A | 06-04-1977 |
| | | | IT | 1018862 B | 20-10-1977 |
| | | | JP | S5044987 A | 22-04-1975 |
| | | | JP | S5646894 B2 | 06-11-1981 |
| | | | US | 3839196 A | 01-10-1974 |
| WO 2024086782 | A2 | 25-04-2024 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021083715 A1
- WO 2019145279 A1